# EUROPEAN PATENT SPECIFICATION

(11) **EP 3 421 287 B1**
(45) Date of publication and mention of the grant of the patent: **29.03.2023**
(21) Application number: 17382405.3
(22) Date of filing: 28.06.2017
(51) Int. Cl.: B60W 10/26, H01H 33/59, B60L 50/51, H01H 9/54, H02J 7/34, H02J 7/00, B60L 15/08

(54) **BATTERY CONNECTION SYSTEM FOR ELECTRIC AND/OR HYBRID VEHICLES**
BATTERIEVERBINDUNGSSYSTEM FÜR ELEKTRO- UND/ODER HYBRIDFAHRZEUGE
SYSTÈME DE CONNEXION DE BATTERIE POUR VÉHICULES ÉLECTRIQUES ET/OU HYBRIDES

(43) Date of publication of application: 02.01.2019
(73) Proprietor: Fico Triad, S.A., 08028 Barcelona (ES)
(72) Inventor: SALA MASIP, Enric, 08232 VILADECAVALLS (BARCELONA) (ES)
(74) Representative: Herrero & Asociados, S.L.

(56) References cited:
- EP-A2- 2 368 749
- DE-A1-102011 118 716
- FR-A1- 2 984 623
- US-A1- 2015 084 404
- US-A1- 2017 047 758

## Description

### Object of the invention

The present invention refers in general to electric and hybrid vehicles. More specifically, the invention relates to a system for connecting and disconnecting batteries from a traction engine of an electric or hybrid vehicle.

An object of the invention is to provide a simplified battery connection system for electric and hybrid vehicles, that can be manufactured with a reduced cost and which at the same time features an improved efficiency.

### Background of the invention

Hybrid and electric vehicles are provided with electric motors for propulsion, which are powered by a high voltage batteries typically with a nominal voltage within the range 300-600 volts. The battery and the electric motors, are electrically connected to each other by high voltage DC buses that carries direct current from the battery to the electric motor through power electronics required to drive the motors.

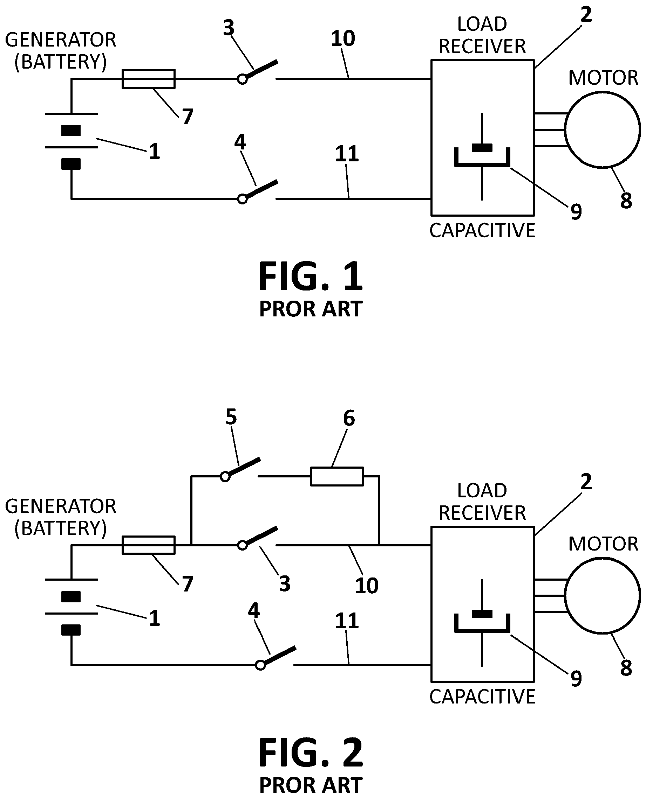

As shown in figure 1, the connection and disconnection of the batteries (1) from a load (2) is conventionally performed by main switches (3,4) consisting of electromechanical relays, with the capability of switching on and off the batteries (1) from the load (2). The load (2) includes the traction motor (8) and power electronics normally inverters (9) that drive the traction motor. A main fuse (7) is traditionally required to prevent damages caused by over-currents.

It is known that such power inverters (9) feature low electric impedance and high input capacitance due to the use of capacitors as filters. Initially before switching on the main switches (3,4), the capacitance of the load (2) is usually discharged, hence a pre-charging operation is necessary before the normal connection between the batteries (1) and the load (2).

However, when the batteries are initially connected to the capacitive load, high peak currents, known as "inrush currents", are produced because the current flowing from the battery (1) to the capacitive load, is only limited by the internal resistance of the components and cables, which is very low. These "inrush currents" could damage the load and also the batteries. Since the contactors have to switch a very high peak of current, the damage can be produced specially to the contactors. In addition, such high current peaks can produce electromagnetic interference side effects to other electronic components.

In order to prevent those undesirable "inrush currents", it is known to use a pre-charging circuit bypassing the main contactor at one of the high voltage busses. Figure 2 shows this classical pre-charging circuit, which has a pre-charge resistor (6) in series with a pre-charge relay (5) dimensioned to limit the maximum current during the pre-charging operation, so that all the current transferred to the capacitive load flows through the pre-charge resistor (6) generating a peak power dissipation in the resistor.

The U.S Patent publication US-2013/0234508 A1 shown an example of this pre-charge topology used in the connection with high voltage batteries in electric vehicles.

Therefore, the conventional connection circuit of figure 2 has three different operation modes:
- Off Mode: the main switches (3,4) are open (off) and no current flows from the battery (1) to the load (2).
- Pre-charge Mode: during the pre-charge operation, the pre-charge relay (5) is closed (On), the first main switch (3) is open (Off) and the second main switch (4) is closed (On) so that the capacitance of the inverter (9) is charged through the pre-charging circuit. No current flows to the motor, only the current to charge the capacitance.
- On Mode: the pre-charge relay (5) is open, the main switches (3,4) are closed (switched On), and the current flows from the battery (1) to the load (2) through the main switches (3,4).

The connection of the battery is produced very few times a day and the pre-charge operation is shorter than 500ms. So, the overall working time of the pre-charge circuit is negligible, but even though, it has to be dimensioned accordingly to the current peak instant power, both for the pre-charge resistor (6) and the pre-charge relay (5).
DE102011118716 A1 discloses a system having two contactors connected with a positive terminal and a negative terminal, respectively, wherein an accumulator is connected in series between the contactors and a semiconductor switch conducts in a closed bidirectional manner and blocks in an opened bidirectional manner.
US2017047758 A1 discloses an electrical system comprising an electrical charge, a decoupling capacitor, and a DC voltage power supply system, comprising first and second terminals.
EP2368749 A2 discloses a power supply device that includes a battery, an output switch connecting the battery to a load, and a control circuit controlling the output switch. The output switch is a semiconductor switching element having controllable ON resistance. In the power supply device, the ON resistance of the semiconductor switching element is controlled by the control circuit so that the ON resistance in a precharge state is set larger than the ON resistance in an electrically-conducted state.

### Summary of the invention

The invention is defined in the attached independent claim.

The invention is based on the use of at least one semiconductor switching device as main switch for connecting and disconnecting the batteries from a load, in an electric or hybrid vehicle. Preferably, both main switches are implemented as semiconductor switching devices.

In addition of the replacement of the traditional relays by semiconductors switches, the invention also foresees the use of one of the main switches, implemented as a semiconductor, to perform the pre-charging operation so that the conventional pre-charging circuit is eliminated.

Therefore, an aspect of the invention refers to a battery connection system comprising positive and negative high-voltage buses connectable respectively to a positive and negative terminals of a battery, and additionally connectable respectively to first and second terminals of a load. In use, the system includes a battery and a load connected by means of the positive and negative high-voltage buses.

The system further comprises first and second switches respectively connected at the positive and negative high-voltage buses, to selectively connect and disconnect a battery from the load during the on and off modes of operation of the system as previously described.

The term battery is to be understood to encompass any form of battery, like for example a set of interconnected battery cells.

The term load includes one or more traction motors and the associated electronics, including power inverters required to drive and control the traction motors.

The system further comprises a controller communicated, that is, connected with the first and second switching devices, to commute, that is, to switch on and off the first and second switching devices, during the on and off modes.

According to the invention, the controller is further adapted to carry out a pre-charge operation for charging the capacitance of the load. In this pre-charge operation, during a pre-defined time interval, the current flowing from the battery to the load is modulated as to maintain the current below a limit for charging capacitance of the load and reducing inrush currents. This is carried out by switching on and off one of the main switches implemented as a semiconductor switching device.

The controller is further adapted to vary the modulation of the current during the pre-charging operation, in accordance the voltage of the load.

Therefore, in the system of the invention, the function of a conventional pre-charging circuit is performed by the main switches implemented as semiconductors and the associated controller. Since there is no pre-charge circuit, the connection system is simplified and the production costs are reduced.

Furthermore, the use of semiconductor switches for the main contactors instead of relays, allow the implementation of short-circuit detection in the semiconductors, which in turn, due to the fact that the short-circuit detection and disconnection of a semiconductor component, is much faster than the time response of a conventional fuse, allow the elimination of the traditional fuse (7).

Some additional advantages of replacing electromechanical power relays by semiconductor devices, are: larger life, reduced weight and volume, reduced electromagnetic noise.

Another object of the invention refers to a programmable controller programmed for controlling the first and second switches of the above-described battery connection system of the invention.

### Brief description of the drawings

Preferred embodiments of the invention, are henceforth described with reference to the accompanying drawings, wherein:
Figures 1 and 2.- show electric diagrams of a battery connection circuits of the prior art.
Figure 3.- is an electric diagram of a battery connection system according to one embodiment of the invention.
Figure 4.- is an electric diagram of a battery connection system according to another embodiment of the invention.
Figure 5.- is an electric diagram of the battery connection system of figure 3 showing the electronic control module.
Figure 6.- shows a graph with the charging current obtained with the system of the invention.
The conduction stage of the switching device (modulation), is represented at the bottom of the figure as a squared signal.

### Preferred embodiment of the invention

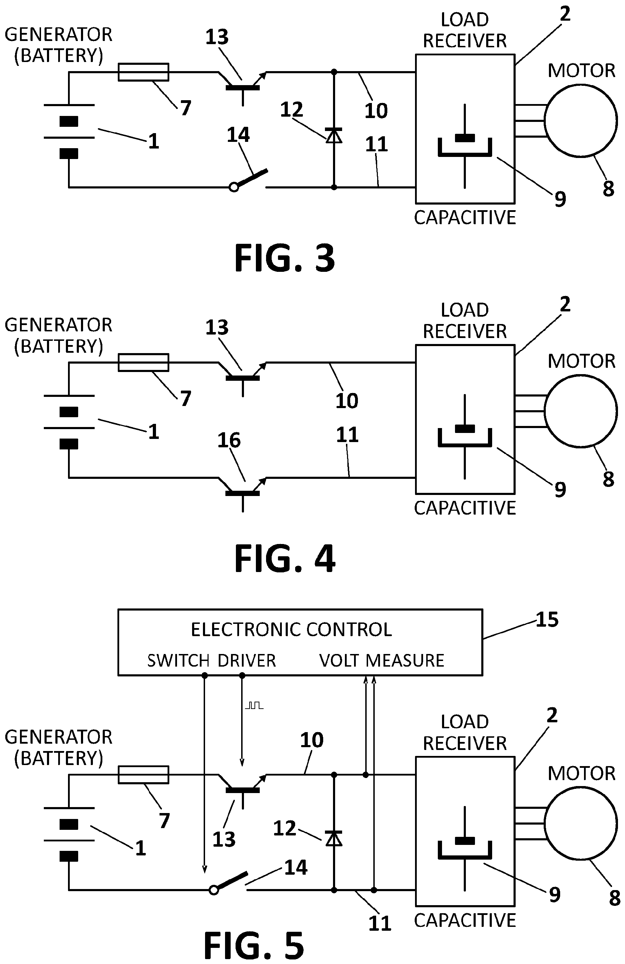

A preferred embodiment of the battery connection system is shown in figure 3, which comprises a positive high-voltage bus or line (10) connected with the positive terminal of a battery (1) and additionally connected with a first terminal of a load (2), and a negative high-voltage bus or line (11) connected with the negative terminal of the battery (1), and additionally connected to a second terminal of the load (2).

First and second switches are respectively connected at the positive and negative high-voltage buses (10,11) to selectively connect and disconnect the battery (1) from the load (2). In the embodiment of figure 3, the first switch is a power transistor (13) and the second switch is a relay (14) In the example of figure 4, both switches are power transistors (13,16).

The load (2) includes a motor (8) and a power inverter (9) which converts, in a known manner, the DC current supplied by the battery into an AC current to drive the motor (8).

A controller (15), comprising an electronic programmable device, is connected with the power transistor (13) and with the second switch for switching them on and off. It should be noted that unlike prior art circuits, there is no pre-charging circuit. Instead, the controller (15) is further adapted, that is, it is programmed to carry out a pre-charge operation for charging the capacitance of the load (2), prior to switching permanently on the power transistor (13), and the second switch.

The circuit of figure 3 operates in one of the following modes:
- Off Mode (vehicle stopped): the controller (15) opens the power transistor (13) and the second switch, the battery (1) is disconnected from the load and no current flows to the load (2).
- Pre-charging Mode: during a pre-defined time interval (for example 100 ms), the controller (15) keeps second switch switched on, and the current is modulated by switching on and off the power transistor (13). Alternatively, both, the power transistor (13) and second switch, are switched on and off at the same time. In this way, a current flowing from the battery to the load is modulated to maintain that current below a maximum allowable current to avoid inrush-currents, while charging the load capacitance.
- On Mode (vehicle driving): once the pre-charge operation has been completed, the controller (15) closes (switches on) the power transistor (13) and the second switch, so that the battery (1) is connected to load and the motor is powered.

The modulation technique used to perform the controlled pre-charge consists of a progressive modulation wherein the transistor (13) is commuted on and off at high speed frequency, with an adjustable duty cycle; Duty cycle = Ratio ON/OFF:
- wherein in Status ON: the transistor allows current circulation, and certain quantity of energy is transferred from the battery to the inductances of the wiring, and
- wherein in Status OFF: the transistor is open and no energy is transferred from the battery. During this time, the energy stored in the inductance of the wiring (high voltage busses) can be transferred to the load. Using a PWM modulation at high frequency, the low inductance of the wirings is enough to filter the current that can flow smoothly to the load.

Therefore, an additional advantage of the invention is that the inductance of the wiring is used as inductor to filter the current, so that no additional wounded inductor is required.

Moreover, a recirculating diode (12) can be used to allow that the energy stored in the wiring inductance, can flow to the load during the Off Mode.

The controller (15) is programmed in such a way that the duty cycle can be modified dynamically depending on the evolution of the voltage at the load.

For that purpose, a voltage measuring device is provided connected to the high voltage output buses (10, 11) for measuring voltage at the load. The voltage measured at these output buses, is the voltage at the output capacitors and it is used by the controller (15) to modulate the switching of the power transistor (13).

In this way when the capacitors are discharged, the duty cycle is set at minimum conduction. Once the capacitors get more voltage load, the duty cycle is progressively increased. With this method, the inrush current to the capacitor tank is modulated as desired.

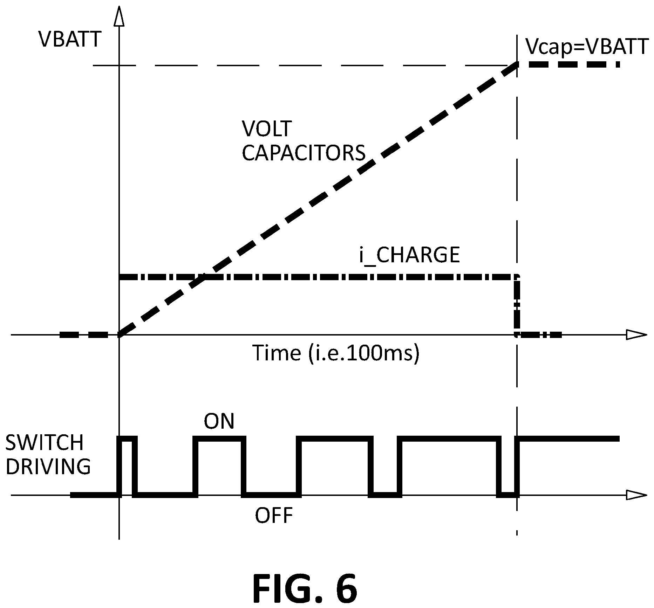

As a consequence and as shown in figure 6, the charge current is substantially constant during the pre-charge operation regardless of the voltage at the load.

## Claims

1. A battery connection system for electric and/or hybrid vehicles, the system comprising:
a positive high-voltage bus (10) connectable to a positive terminal of a battery (1), and additionally connectable to a first terminal of a load (2),
a negative high-voltage bus (11) connectable to a negative terminal of the battery (1), and additionally connectable to a second terminal of the load (2),
first and second main switches respectively connected at the positive and negative high-voltage buses (10,11), to selectively connect and disconnect a battery (1) from a load (2),
when the system is connected to a battery and a load,
wherein at least one of the first and second main switches is a semiconductor switching device (13), and wherein the system further comprises a controller (15) communicated with the first and second main switches, and wherein the controller (15) is adapted for switching on and off the first and second main switches for connecting and disconnecting the battery from the load,
and wherein the controller (15) is further adapted to carry out a pre-charge operation during a pre-defined time interval, wherein the semiconductor switching device (13) is switched on and off, in order to modulate current flowing from the battery (1) to the load (2) during the pre-charge operation,
wherein the first main switch is a power transistor (13), wherein the battery connection system operates in one of the following modes:
- Off Mode, when the vehicle is stopped: the controller (15) opens the power transistor (13) and the second main switch, the battery (1) is disconnected from the load and no current flows to the load (2);
- Pre-charging Mode: during a pre-defined time interval, the controller (15) keeps second main switch switched on, and the current is modulated by switching on and off the power transistor (13), or, both, the power transistor (13) and second main switch, are switched on and off at the same time, so that a current flowing from the battery to the load is modulated to maintain that current below a maximum allowable current to avoid inrush currents, while charging the load capacitance;
- On Mode, when the vehicle is driving: once the pre-charge operation has been completed, the controller (15) closes and switches on the power transistor (13) and the second main switch so that the battery (1) is connected to load and the motor of the vehicle is powered,
wherein the system further comprises a voltage measuring device connected for measuring voltage at the load, and wherein the controller (15) is further adapted to vary the current modulation during the pre-charging operation according to the voltage measured at the load (2),
wherein the controller (15) is adapted to carry out a PWM modulation during the pre-charge operation, and
wherein the controller (15) is programmed in such a way that the duty cycle of the PWM modulation can be modified dynamically depending on the evolution of the voltage at the load, so that the controller (15) is further adapted to maintain a substantially constant current during the pre-charge operation.

2. System according to any of the preceding claims, wherein the first and second main switches are semiconductor switching devices (13,16).

3. System according to any of the preceding claims, wherein the controller (15) is further adapted to switch on the first and second main switches during an On mode of the system, and to switch off the first and second main switches during an Off mode of the system.

4. System according to any of the preceding claims, further comprising a recirculating diode (12) connected in parallel with the load (2) and having its anode connected with the negative high-voltage bus (11), and its cathode connected with the positive high-voltage bus (10).

5. System according to any of the preceding claims, wherein the controller (15) is a programmable controller programmed for controlling the first and second main switches

## Patentansprüche

1. Batterieverbindungssystem für Elektro- und/oder Hybridfahrzeuge, wobei das System umfasst:
ein positiver Hochspannungsbus (10), der mit einem positiven Anschluss einer Batterie (1) verbindbar ist und zusätzlich mit einem ersten Anschluss einer Last (2) verbindbar ist,
ein negativer Hochspannungsbus (11), der mit einem negativen Anschluss der Batterie (1) verbindbar ist und zusätzlich mit einem zweiten Anschluss der Last (2) verbindbar ist,
einen ersten und einen zweiten Hauptschalter, der an dem positiven bzw. negativen Hochspannungsbus (10, 11) verbunden ist, um eine Batterie (1) wahlweise mit einer Last (2) zu verbinden oder zu trennen, wenn das System mit einer Batterie und einer Last verbunden ist,
wobei zumindest einer der ersten und zweiten Hauptschalter eine Halbleiter-Schaltvorrichtung (13) ist, und wobei das System weiter eine Steuerung (15) umfasst, die mit dem ersten und zweiten Hauptschalter in Verbindung steht, und wobei die Steuerung (15) zum Ein- und Ausschalten des ersten und zweiten Hauptschalters zum Verbinden und Trennen der Batterie von der Last ausgebildet ist,
und wobei die Steuerung (15) weiter ausgebildet ist, einen Vor- Belastungsvorgang während eines vorab festgelegten Zeitintervalls durchzuführen, wobei die Halbleiter-Schaltvorrichtung (13) ein- und ausgeschaltet wird, um den von der Batterie (1) zur Last (2) fließenden Strom während des Vor- Belastungsvorgangs anzupassen,
wobei der erste Hauptschalter ein Leistungstransistor (13) ist,
wobei das Batterieverbindungssystem in einem der folgenden Modi arbeitet:
- Aus-Modus, wenn das Fahrzeug angehalten ist: die Steuerung (15) öffnet den Leistungstransistor (13) und den zweiten Hauptschalter, die Batterie (1) ist von der Last getrennt und es fließt kein Strom zur Last (2);
- Vor-Belastungs-Modus: Während eines vorab festgelegten Zeitintervalls hält die Steuerung (15) den zweiten Hauptschalter eingeschaltet, und der Strom wird durch Ein- und Ausschalten des Leistungstransistors (13) angepasst, oder sowohl der Leistungstransistor (13) als auch der zweite Hauptschalter werden gleichzeitig ein- und ausgeschaltet, so dass ein von der Batterie zur Last fließender Strom so angepasst wird, dass dieser Strom unter einem maximal zulässigen Strom gehalten wird, um Einschaltströme zu vermeiden, während die Lastkapazität geladen wird;
- Ein-Modus, wenn das Fahrzeug fährt: sobald der Vor-Belastungsvorgang abgeschlossen ist, schließt die Steuerung (15) den Leistungstransistor (13) und den zweiten Hauptschalter und schaltet sie ein, so dass die Batterie (1) mit der Last verbunden ist und der Motor des Fahrzeugs mit Strom versorgt wird,
wobei das System weiter eine Spannungsmessvorrichtung umfasst, die angeschlossen ist, um eine Spannung an der Last zu messen, und wobei die Steuerung (15) weiter ausgebildet ist, die Stromänderung während des Vor-Belastungsvorgangs entsprechend der an der Last (2) gemessenen Spannung zu variieren,
wobei die Steuerung (15) so ausgebildet ist, dass sie während des Vor-Belastungsvorgang eine PWM-Modulation durchführt, und
wobei die Steuerung (15) so programmiert ist, dass das Tastverhältnis der PWM-Modulation in Abhängigkeit von der Entwicklung der Spannung an der Last dynamisch änderbar ist, so dass die Steuerung (15) weiter ausgebildet ist, einen im Wesentlichen konstanten Strom während des Vor-Belastungsvorgang aufrecht zu erhalten.

2. System nach einem der vorhergehenden Ansprüche, wobei der erste und der zweite Hauptschalter Halbleiter-Schaltvorrichtungen (13, 16) sind.

3. System nach einem der vorhergehenden Ansprüche, wobei die Steuerung (15) weiter ausgebildet ist, den ersten und den zweiten Hauptschalter während eines Ein-Modus des Systems einzuschalten und den ersten und den zweiten Hauptschalter während eines Aus-Modus des Systems auszuschalten.

4. System nach einem der vorhergehenden Ansprüche, weiter umfassend eine parallel zur Last (2) geschaltete Umlaufdiode (12), deren Anode mit dem negativen Hochspannungsbus (11) und deren Kathode mit dem positiven Hochspannungsbus (10) verbunden ist.

5. System nach einem der vorhergehenden Ansprüche, wobei die Steuerung (15) eine programmierbare Steuerung ist, die zur Steuerung des ersten und zweiten Hauptschalters programmiert ist.

## Revendications

1. Système de connexion de batterie pour véhicules électriques et/ou hybrides, le système comprenant :
un bus haute tension positif (10) connectable à une borne positive d'une batterie (1), et de plus connectable à une première borne d'une charge (2),
un bus haute tension négatif (11) connectable à une borne négative de la batterie (1), et de plus connectable à une deuxième borne de la charge (2),
des premier et deuxième commutateurs principaux respectivement connectés aux bus haute tension positif et négatif (10, 11) pour sélectivement connecter une batterie (1) à une charge (2) et déconnecter la batterie de la charge, quand le système est connecté à une batterie et une charge,
dans lequel au moins l'un des premier et deuxième commutateurs principaux est un dispositif de commutation à semi-conducteur (13), et lequel système comprend en outre un contrôleur (15) en communication avec les premier et deuxième commutateurs principaux, et dans lequel le contrôleur (15) est adapté pour allumer et éteindre les premier et deuxième interrupteurs principaux pour connecter la batterie à la charge et déconnecter la batterie de la charge,
et dans lequel le contrôleur (15) est en outre adapté pour réaliser une opération de pré-charge durant un intervalle de temps prédéfini, dans lequel le dispositif de commutation à semi-conducteur (13) est allumé et éteint, afin de moduler le courant circulant de la batterie (1) à la charge (2) durant l'opération de pré-charge,
dans lequel le premier commutateur principal est un transistor de puissance (13),
dans lequel le système de connexion de batterie fonctionne dans l'un des modes suivants :
- mode Arrêt, quand le véhicule est stoppé : le contrôleur (15) ouvre le transistor de puissance (13) et le deuxième commutateur principal, la batterie (1) est déconnectée de la charge et aucun courant ne circule vers la charge (2) ;
- mode Pré-charge : durant un intervalle de temps prédéfini, le contrôleur (15) maintient le deuxième commutateur principal allumé, et le courant est modulé par l'allumage et l'extinction du transistor de puissance (13), ou bien à la fois le transistor de puissance (13) et le deuxième commutateur principal sont allumés et éteints en même temps, si bien qu'un courant circulant de la batterie à la charge est modulé pour que le courant soit maintenu sous un courant maximal admissible pour éviter les appels de courants, tout en chargeant la capacité de charge ;
- mode Marche, quand le véhicule circule : une fois que l'opération de pré-charge est terminée, le contrôleur (15) ferme et allume le transistor de puissance (13) et le deuxième commutateur principal, si bien que la batterie (1) est connectée à la charge et le moteur du véhicule est alimenté,
lequel système comprend en outre un dispositif de mesure de tension connecté pour mesurer la tension au niveau de la charge, et dans lequel le contrôleur (15) est en outre adapté pour faire varier la modulation de courant durant l'opération de pré-charge en fonction de la tension mesurée au niveau de la charge (2),
dans lequel le contrôleur (15) est adapté pour réaliser une modulation MLI durant l'opération de pré-charge, et
dans lequel le contrôleur (15) est programmé de telle façon que le cycle de service de la modulation MLI puisse être modifié dynamiquement en fonction de l'évolution de la tension au niveau de la charge, si bien que le contrôleur (15) est en outre adapté pour maintenir un courant pratiquement constant durant l'opération de pré-charge.

2. Système selon l'une quelconque des revendications précédentes, dans lequel les premier et deuxième commutateurs principaux sont des dispositifs de commutation à semi-conducteur (13, 16).

3. Système selon l'une quelconque des revendications précédentes, dans lequel le contrôleur (15) est en outre adapté pour allumer les premier et deuxième commutateurs principaux durant un mode Marche du système, et pour éteindre les premier et deuxième commutateurs principaux durant un mode Arrêt du système.

4. Système selon l'une quelconque des revendications précédentes, comprenant en outre une diode de recirculation (12) connectée en parallèle avec la charge (2) et ayant son anode connectée au bus haute tension négatif (11) et sa cathode connectée au bus haute tension positif (10).

5. Système selon l'une quelconque des revendications précédentes, dans lequel le contrôleur (15) est un contrôleur programmable programmé pour commander les premier et deuxième commutateurs principaux.
